# EUROPEAN PATENT APPLICATION

(11) **EP 3 832 768 A1**
(43) Date of publication of application: **09.06.2021**
(21) Application number: 19841133.2
(22) Date of filing: 26.04.2019
(51) Int. Cl.: H01M 10/04, C09J 7/25, H01G 9/048, H01M 10/0587

(54) **BASE MATERIAL FILM, LOOSENESS PREVENTION TAPE, AND STORAGE DEVICE**

(30) Priority: 27.07.2018 JP 2018141217
(71) Applicant: Kureha Corporation, Chuo-ku Tokyo 103-8552 (JP)
(72) Inventor: IGARASHI, Tamito, Tokyo 103-8552 (JP); SUGAHARA, Mayumi, Tokyo 103-8552 (JP); KOBAYASHI, Shota, Tokyo 103-8552 (JP)
(74) Representative: BRP Renaud & Partner mbB Rechtsanwälte Patentanwälte Steuerberater
(86) International application number: PCT/JP2019/017929
(87) International publication number: WO 2020/021807

(57) **Abstract**

A base film is provided that is unlikely to become electrostatically charged. A base film used for a tape for preventing loosening of a wound electrode body, the base film containing a vinylidene fluoride resin as a main component, and the vinylidene fluoride resin containing 1 ppm or greater and less than 12000 ppm of an ionic surfactant relative to a weight of the vinylidene fluoride resin.

## Description

### TECHNICAL FIELD

The present invention relates to a base film, a tape including the base film for preventing loosening of a wound electrode body, and a wound power storage device using same.

### BACKGROUND ART

Lithium-ion secondary batteries, lithium-ion capacitors, and electric double-layer capacitors are known as a power storage device, in which a wound element formed by winding band-shaped positive and negative electrodes along with a separator interposed in-between are enclosed with an electrolyte solution in a metal case. Such a power storage device has various forms, including a coin, a cylinder, a rectangle, and a laminate depending on its applications. Among these, cylindrical and rectangular lithium-ion secondary batteries are used in various applications, such as portable devices, electric tools, and electric vehicles.

Charging/discharging portions of cylindrical and rectangular lithium-ion secondary batteries typically have structures in which, some laminate units, each of which including a positive electrode-separator-negative electrode-separator as one laminate unit, are layered. A method of forming this type of laminate structure includes a winding method in which laminate units are wound, and a sheet-lamination method in which sheet-shaped laminate units are layered. In particular, the winding method is widely used. In a wound lithium-ion secondary battery, specifically, a wound electrode body is formed by simultaneously layering and winding a laminate unit of a positive electrode-a separator-a negative electrode-a separator around a winding core. A cylindrical or rectangular lithium-ion secondary battery is one in which these wound electrode bodies are placed in a cylindrical or rectangular case substantially with no gaps and enclosed together with a non-aqueous electrolyte solution.

Unwinding of the wound electrode body should be avoided so that the wound electrode body housed in the case is not loosened. As a means of preventing unwinding of the wound electrode body, a method by which an adhesive tape is attached around outermost periphery of the wound electrode body is used. As a base film of an adhesive tape, a vinylidene fluoride resin film is widely used.

For example, as to a technology where a sealing tape is wound and attached around a wound electrode body to protect and insulate as well as to support the form of the wound electrode body, Patent Document 1 describes use of polyvinylidene fluoride having a great affinity with an electrolyte solution for the sealing tape to enhance wettability and spreadability for the electrolyte solution in the sealing tape.

### [Citation List]

### [Patent Document]

Patent Document 1: JP 2007-184234 A
Patent Document 2: JP 2006-073221 A

### SUMMARY OF INVENTION

### [Technical Problem]

A vinylidene fluoride resin, representatively exemplified by polyvinylidene fluoride, tends to be electrostatically charged and less likely to be destaticized due to its high dielectric constant and high electrical insulation. Thus, in a production process of a base film, a production process of an adhesive tape, and a production process of a power storage device having the adhesive tape, for example, in the case where contamination control of each production process is not sufficient, there is a risk of absorption of foreign substances by the base film.

In Patent Document 2, a technology, by which a surfactant is coated on a porous layer containing vinylidene fluoride resin in a separator for a non-aqueous secondary battery, is proposed. As described in the examples of Patent Document 2, a method that allows the surfactant to be retained in the porous layer is easy. However, in the case where coating of the surfactant over a non-porous base film is attempted, uniform distribution of the surfactant in a small amount is not easy. In addition, in an adhesive tape, an adhesive layer is provided on a base film, and for a method in which a surfactant is soaked and coated on a surface like a method described in Patent Document 2, there is a problem where coating of the adhesive layer being difficult.

Thus, the present invention is completed in light of these problems described above, and an object of the present invention is to provide a base film that is less likely to be electrostatically charged, the base film being used in a tape to prevent loosening of a wound electrode body.

### [Solution to Problem]

The present inventors found that problems caused by charging of a base material tape in the production of a power storage device with a loosening prevention tape can be overcome by allowing a vinylidene fluoride resin film, used as a base material for the loosening prevention tape, to include an ionic surfactant. Therefore, to solve these problems described above, the base film according to an embodiment of the present invention is a base film used for a tape that prevents loosening of a wound electrode body, the base film including a vinylidene fluoride resin as a main component, the vinylidene fluoride resin containing 1 ppm or greater and less than 12000 ppm of an ionic surfactant relative to the weight of the vinylidene fluoride resin.

### [Advantageous Effects of Invention]

According to the present invention, a risk of, for example, failures by absorbing dust or foreign substances on a tape for preventing loosening of a wound electrode body due to static electricity can be reduced. Furthermore, a step of coating an antistatic agent after molding of a base material becomes unnecessary, simplifying the overall production process.

### DESCRIPTION OF EMBODIMENTS

A loosening prevention tape, and a base film that is used therein according to the embodiments of the present invention are described below.

### Tape for preventing loosening

The loosening prevention tape according to the present embodiment is a tape for preventing loosening of a wound electrode body and is a tape to be attached around outermost periphery of the wound electrode body so as to prevent unwinding of the wound electrode body when the wound electrode body constituting a power storage device is housed in a case. The tape for loosening prevention has a base film and an adhesive layer. The base film of the present embodiment is formed by a vinylidene fluoride resin containing an ionic surfactant.

### Base film

### Ionic surfactant

For the ionic surfactant, any cationic surfactants and anionic surfactants can be used, and an anionic surfactant is preferably used. During production of an ionic surfactant-containing vinylidene fluoride resin, in the case where melt-kneading is performed by mixing a vinylidene fluoride resin and an ionic surfactant, a cationic surfactant such as an amine salt and a quaternary ammonium salt causes discoloration or deterioration of the vinylidene fluoride resin. Therefore, use of an anionic surfactant as an ionic surfactant can prevent the discoloration and deterioration of the vinylidene fluoride resin.

Examples of the anionic surfactant include hydrocarbon-based ionic surfactants and fluorine-based ionic surfactants. However, from the perspective of electrochemical stability, a fluorine-based ionic surfactant is preferably used.

As the ionic surfactant, an ionic surfactant having from 4 to 14 carbons is preferably used, and an ionic surfactant having from 4 to 10 carbons is more preferably used. As the ionic surfactant, a known ionic surfactant can be used.

Furthermore, specific examples of the anionic surfactant include alkyl sulfate salt, alkyl sulfonate salt, alkylbenzene sulfonate salt, alkylnaphthalene sulfonate salt, succinic acid ester sulfonate salt, phosphate salt, fatty acid ethyl sulfonate salt, fatty acid salt, fatty acid alcohol sulfate salt, fluoroalkyl carboxylate salt, and fluoroalkyl sulfonate salt. Among these, fluoroalkyl sulfonate salt and fluoroalkyl carboxylate salt are particularly preferred.

The content of the ionic surfactant is from 1 ppm to 12000 ppm relative to the unit weight of the vinylidene fluoride resin. The lower limit of the content of the ionic surfactant is preferably 10 ppm or greater, or more preferably 50 ppm or greater. The content of the ionic surfactant of 1 ppm or greater relative to the unit weight of the vinylidene fluoride resin enhances electric conduction and makes it difficult to be electrostatically charged. Furthermore, the upper limit of the content of the ionic surfactant is preferably 1000 ppm or less, or more preferably 300 ppm or less.

By allowing the content of the ionic surfactant to be 12000 ppm or less, bleed-out of the surfactant from the base film formed from the vinylidene fluoride resin and flowing out to an electrolyte solution are less likely to occur, and generation of a gas due to electrochemical decomposition reaction can be suppressed. Furthermore, bleed-out of the surfactant onto a base film surface may also affect coatability of the adhesive layer. Thus, the amount of the surfactant to be added is preferably suppressed to an amount required to suppress electrical charging and impart destaticizing properties, which are objectives.

### Vinylidene fluoride resin

A vinylidene fluoride resin constituting the base film may be a homopolymer of vinylidene fluoride or a copolymer of vinylidene fluoride and another monomer that is copolymerizable with the vinylidene fluoride. Examples of the other monomer that is copolymerizable with the vinylidene fluoride include hydrocarbon-based monomers, such as ethylene and propylene, and fluorine-containing monomers other than vinylidene fluoride, such as vinyl fluoride, trifluoroethylene, chlorotrifluoroethylene, tetrafluoroethylene, hexafluoropropylene, and fluoroalkyl vinyl ether.

Furthermore, as the other monomer, a monomer that has at least one adhesive functional group selected from the group consisting of a carboxy group, an epoxy group, a hydroxy group, and a carbonyl group and that is copolymerizable with vinylidene fluoride may be used. Introducing the adhesive functional group by using such a monomer allows a modified vinylidene fluoride polymer to be used.

Examples of the monomer having a carboxy group include unsaturated monobasic acid, such as acrylic acid and crotonic acid; unsaturated dibasic acid, such as maleic acid and citraconic acid, or monoalkyl esters thereof. Furthermore, examples of the monomer having an epoxy group include allyl glycidyl ether, methallyl glycidyl ether, glycidyl crotonate, and glycidyl allyl acetate. Furthermore, examples of the monomer having a hydroxy group include hydroxyethyl acrylate and hydroxypropyl acrylate. Furthermore, examples of the monomer having a carbonyl group include ethylene carbonate.

In the case where the vinylidene fluoride resin is a copolymer, the vinylidene fluoride resin contains preferably 70 mol% or greater, more preferably 80 mol% or greater, and even more preferably 90 mol% or greater, of vinylidene fluoride unit. Furthermore, in the case where the monomer having an adhesive functional group is used, the vinylidene fluoride resin preferably contains from 0.03 mol% to 3 mol% of the monomer unit having an adhesive functional group.

### Resin besides vinylidene fluoride resin

The base film of the present embodiment may further contain an additional resin besides the vinylidene fluoride resin as long as the vinylidene fluoride resin is a main component. Note that "main component" in the present specification is intended to mean being a resin that is present in a highest proportion among a plurality of resins. Examples of the resin besides the vinylidene fluoride resin include acrylic resins, cyanoethylated ethylene vinyl alcohol copolymer resins, and aromatic polyester resins. Among these, from the perspective of mechanical properties, acrylic resins and aromatic polyester resins are preferred.

Examples of the acrylic resin include polymethylmethacrylate (PMMA). As the resin of the base film, by blending an acrylic resin in addition to the vinylidene fluoride resin, an effect of suppressing degree of crystallization of the vinylidene fluoride resin can be achieved. By suppressing the degree of crystallization of the vinylidene fluoride resin, flexibility can be imparted to the base film, and when the tape for preventing loosening is attached to a wound electrode body, the wound body is less likely to be separated from the tape.

The aromatic polyester resin is a polyester resin, in which at least one of diol or dicarboxylic acid constituting the polyester is an aromatic compound. Among these, a resin in which the dicarboxylic acid is an aromatic compound is preferred. Specific examples of the preferred aromatic polyester resin include polyethylene terephthalate, polybutylene terephthalate, polyethylene naphthalate, and polybutylene naphthalate. Among these, polyethylene terephthalate is preferred. Furthermore, to enhance affinity with the vinylidene fluoride resin, the degree of crystallization of the base film is also preferably reduced by, for example, substituting a part of the diol with another diol component, such as 1,4-cyclohexanedimethanol (CHDM), or by substituting a part of carboxylic acid, such as a part of terephthalic acid, with isophthalic acid. As the resin of the base film, by blending an aromatic polyester resin in addition to the vinylidene fluoride resin, an effect of enhancing heat resistance can be achieved. By enhancing the heat resistance of the vinylidene fluoride resin, the tape for preventing loosening using the base film of the present embodiment can achieve high safety when incorporated into a secondary battery, such as a lithium-ion secondary battery, and an effect of achieving electrochemical stability.

In the case where the base film of the present embodiment further contains a resin besides the vinylidene fluoride resin, the proportion of the resin besides the vinylidene fluoride resin is preferably 80 wt% or less, more preferably 40 wt% or less, and most preferably 20 wt% or less. Furthermore, the proportion of the resin besides the vinylidene fluoride resin is preferably 5 wt% or greater, and more preferably 10 wt% or greater. By selecting an appropriate resin besides the vinylidene fluoride resin, in addition to enhancement of mechanical properties and thermophysical properties, affinity with the adhesive layer can be enhanced.

Furthermore, in the case where the base film contains the vinylidene fluoride resin and the aromatic polyester resin, the mass ratio is preferably from 95:5 to 60:40, and more preferably from 90:10 to 70:30. In the case where the vinylidene fluoride resin and the acrylic resin are contained, the mass ratio is preferably from 95:5 to 40:60, and more preferably from 90:10 to 60:40. In the case where the vinylidene fluoride resin, the aromatic polyester resin, and the acrylic resin are contained, the mass ratio is preferably from 85:10:5 to 40:30:30, and more preferably from 80:10:10 to 60:20:20. By setting to the range described above, effect of using the vinylidene fluoride resin can be achieved, and effects expected by the other resins can be also achieved.

### Structure of base film

The thickness of the base film is not particularly limited and, for example, is from 10 to 300 µm, preferably from 15 to 150 µm, and more preferably from 20 to 80 µm.

In the tape for preventing loosening of the present embodiment, the base film may be multi-layered. In the case where the base film of the tape for preventing loosening is multi-layered, at least one layer has only to be a layer containing the ionic surfactant-containing vinylidene fluoride resin; however, more preferably, all the layers constituting the base material contain the ionic surfactant-containing vinylidene fluoride resin.

The resin layer besides the layer containing the ionic surfactant-containing vinylidene fluoride resin (hereinafter, "other resin layer") may further contain another resin layer containing, as a main component, a resin except the vinylidene fluoride resin. The other resin layer may be arranged adjacent or not adjacent to the layer containing the ionic surfactant-containing vinylidene fluoride resin. Examples of the other resin layer include a resin layer imparting heat resistance. Arranging a resin layer having heat resistance has advantages of achieving high safety and stabilizing physical properties.

Examples of the resin that is not the vinylidene fluoride resin and that is the main component of the other resin layer in the base film include aromatic polyester resins. The description of the aromatic polyester resin is as described above. As the aromatic polyester resin in the other resin layer is preferably polyethylene terephthalate or polybutylene terephthalate, and more preferably polyethylene terephthalate.

### Volume resistivity

Antistatic performances of the film are related to electrical insulation of the film, and for example, Patent Document (JP 2004-182833 A) describes a film formed from a polyether aromatic imide resin having the volume resistivity of 1 × 10⁴ Ω·cm or greater and less than 1 × 10¹³ Ω·cm. In general, a lower volume resistivity achieves superior antistatic performances.

For the base film according to the present embodiment, the volume resistivity is adjusted to a range from 1 x 10⁹ Ω·cm or greater and less than 1 x 10¹³ Ω·cm while the base film has the configuration described above. Furthermore, the volume resistivity of the base film of the present embodiment can be adjusted to 5 x 10⁹ Ω·cm or greater and less than 5 x 10¹² Ω·cm, and can be also adjusted to 1 x 10¹⁰ Ω·cm or greater and less than 1 × 10¹² Ω·cm. The volume resistivity of 1 x 10⁹ Ω·cm or greater can avoid rapid electric discharge in the case where the positive electrode and the negative electrode are short-circuited through the base film. Furthermore, the volume resistivity of 1 × 10¹³ Ω·cm or less can suppress electrostatic charging of the base film. Thus, in production process of a secondary battery or a tape for preventing loosening, contamination of the tape for preventing loosening by dust or the like can be suppressed. As a result, enhancement of yield during secondary battery production can be acheved. By adjusting the type and added amount of the ionic surfactant added in the production of the base film, a base film having a predetermined volume resistivity can be obtained. As the ionic surfactant, use of a compound having a lower molecular weight can reduce the volume resistivity with an even less blended weight. Furthermore, with an identical ionic surfactant, the volume resistivity can be reduced by increasing the blended amount.

### Production method for base film

The base film of the tape for preventing loosening can be obtained by melt-molding the ionic surfactant-containing vinylidene fluoride resin. Specific examples of the molding method include melt press molding methods using a press molding machine and melt extrusion molding methods using a T-die.

Examples of a preparation method of the ionic surfactant-containing vinylidene fluoride resin include (1) a preparation method by mixing the vinylidene fluoride resin and a desired amount of the ionic surfactant and melt-kneading this, and (2) a preparation method by adding an ionic surfactant in a polymerization reaction process of the vinylidene fluoride resin and obtaining the vinylidene fluoride resin in a state where a desired amount of the ionic surfactant is remained. In the case where a method in which the vinylidene fluoride resin and the ionic surfactant are mixed and melt-kneaded, after the kneaded product is extruded, the kneaded product may be pelletized. In the case where the ionic surfactant is added during the polymerization of the vinylidene fluoride resin, as the polymerization method, an emulsion polymerization method, a suspension polymerization method, and a solution polymerization method can be used. The polymerization is preferably performed by an emulsion polymerization method. Although an emulsifier is typically used in an emulsion polymerization method, in the present embodiment, the ionic surfactant added to the vinylidene fluoride resin can be also utilized as an emulsifier. Therefore, use of the ionic surfactant as an emulsifier in the emulsion polymerization does not require a separate preparation and addition of the ionic surfactant. Furthermore, use of the fluorine-based ionic surfactant as an emulsifier has an advantage of being less likely to cause a side reaction, such as hydrogen abstraction reaction, in radical polymerization. Furthermore, use of anionic surfactant, which is sulfonate salt or carboxylate salt, as an emulsifier has an advantage of stabilizing the vinylidene fluoride polymer latex in an emulsion polymerization method. In the case where the vinylidene fluoride resin containing the surfactant is produced by the emulsion polymerization method, the amount of the remained surfactant may be adjusted to a preferred value by, for example, a method in which washing is performed after the polymer is deposited by salting-out.

### Adhesive layer

The loosening prevention tape according to the present embodiment is a tape to be attached around the outermost periphery of a wound electrode body, as described above. The wound electrode body is a wound electrode body in which a positive electrode material and a negative electrode material are laminated in a manner that a separator is interposed between the positive electrode material and the negative electrode material and which is obtained by winding these, as described below. In the case where the outermost periphery of the wound electrode body is a separator, an adhesive agent constituting the adhesive layer has only to be an adhesive agent that can adhere to a separator. The type of an adhesive agent is not limited as long as the adhesive agent can adhere to a separator and, for example, polyisoprene-based adhesive agents, styrene-butadiene random copolymer-based adhesive agents, styrene-isoprene block copolymer-based adhesive agents, butyl rubber adhesive agents, polyisobutylene adhesive agents, acrylic adhesive agents, and silicone-based adhesive agents can be used. These adhesive agents can be easily obtained as commercially available products. The adhesive strength may be selected depending on, for example, the material of the separator. Among these, from the perspective of affinity with the vinylidene fluoride resin, an acrylic adhesive agent containing an acrylic resin is preferred.

The adhesive layer may be provided on only one face or both faces of the base film. The thickness of the adhesive layer can be, for example, from 10 to 30 µm in terms of dry thickness.

The coating method of the adhesive agent to the base film surface is not particularly limited, and examples thereof include dipping methods, and methods that use a spray, coater, or printer. The method of drying the coated adhesive agent is not particularly limited, and examples thereof include natural drying, a method that dries in a drier set to a predetermined temperature, or a method that uses a drier attached to a coater. The drying temperature is, for example, preferably from 50 to 120°C in the case where hot-air drying is employed. The drying time can be appropriately selected depending on the method of coating.

Furthermore, the adhesive layer may be provided by extruding the adhesive layer at the same time as the molding of the base film. The adhesive layer at this time is not particularly limited as long as the adhesive layer is a resin that can be subjected to co-extrusion film formation without being decomposed or deteriorated at the film formation temperature of the vinylidene fluoride resin, which becomes the base material, and an acrylic resin, a polyvinyl alcohol resin, a polyvinyl ester resin, and a polyester resin can be used, for example.

### Power storage device

The power storage device according to the present embodiment has a structure in which a wound electrode body and an electrolyte solution are sealed in a case container together. Examples of the power storage device include lithium-ion secondary batteries, lithium-ion capacitors, and electric double-layer capacitors, and among these, the power storage device is most preferably applied for a lithium-ion secondary battery.

### Wound electrode body

The wound electrode body in the present embodiment is a wound electrode body formed by winding a material obtained by laminating, for example, positive electrode-separator-negative electrode, positive electrode-separator-negative electrode-separator, separator-positive electrode-separator-negative electrode, or separator-positive electrode-separator-negative electrode-separator, in this order. Any one of the positive electrode or the negative electrode may be arranged inside. To prevent unwinding of the wound electrode body, the tape for preventing loosening of the present embodiment is used. At this time, permeation of the electrolyte solution may be promoted for the tape for preventing loosening by forming a large number of fine through pores by, for example, needle-punching.

The size of the tape for preventing loosening is not particularly limited and can be set based on the size of the wound electrode body.

### Positive electrode material and negative electrode material

The positive electrode material and the negative electrode material are not particularly limited, and examples thereof include lithium composite metal oxides, elements that can be alloyed with lithium, compounds having an element that can be alloyed with lithium, metal lithium, and carbon materials. Examples of the lithium composite metal oxide include lithium composite metal oxides represented by LiaNi_{b}Co_{c}Mn_{d}DeO_{f} (0.2 ≤ a ≤ 1.5, b + c + d + e = 1, 0 ≤ b, c, d, e ≤ 1, D is at least one element selected from the group consisting of Fe, Cr, Cu, Zn, Ca, Mg, Zr, S, Si, Na, K, Al, Ti, P, Ga, Ge, V, Mo, Nb, W, La, Hf, and Rf, 1.7 ≤ f ≤ 2.1), lithium composite metal oxides having a spinel structure, such as LiMn₂O₄ and LiMn_{1.5}Ni_{0.5}O₄, and Li₄Ti₅O₁₂, and lithium-iron based composite oxides, such as LiFePO₄. Specific examples of the element that can be alloyed with lithium include Na, K, Rb, Cs, Fr, Be, Mg, Ca, Sr, Ba, Ra, Ti, Ag, Zn, Cd, Al, Ga, In, Si, Ge, Sn, Pb, Sb, and Bi. In particular, Si or Sn is preferred. Specific examples of the compound having an element that can be alloyed with lithium include ZnLiAl, AlSb, SiB₄, SiB₆, Mg₂Si, Mg₂Sn, Ni₂Si, TiSi₂, MoSi₂, CoSi₂, NiSi₂, CaSi₂, CrSi₂, CusSi, FeSi₂, MnSi₂, NbSi₂, TaSi₂, VSi₂, WSi₂, ZnSi₂, SiC, Si₃N₄, Si₂N₂O, SiOv (0 < v ≤ 2), SnOw (0 < w ≤ 2), SnSiO₃, LiSiO, and LiSnO. In particular, SiOₓ (0.3 ≤ x ≤ 1.6) is preferred. As the carbonaceous material, graphitic materials, non-graphitizable carbon having a low degree of crystallinity, and activated carbon are preferred.

### Separator

The separator prevents short circuit by separating the positive electrode material and the negative electrode material, serves to retain the electrolyte solution, and is arranged between the positive electrode material and the negative electrode material. As the separator, for example, a fine porous film of polymeric materials, such as polyolefin, non-woven fabric, glass fibers, and other porous materials can be used. The thickness of the separator is not particularly limited. The separator having a larger width than dimensions of the positive electrode material and the negative electrode material has only to be used.

### Electrolyte solution

As the electrolyte solution used for impregnation of the separator, for example, an electrolyte solution obtained by dissolving an electrolyte, such as lithium salt, in a non-aqueous solvent (organic solvent) can be used. Note that examples of the electrolyte include LiPF₆, LiAsF₆, LiClO₄, LiBF₄, CH₃SO₃Li, CF₃SO₃Li, LiCl, and LiBr. Furthermore, as the organic solvent of the electrolyte, propylene carbonate, ethylene carbonate, 1,2-dimethoxyethane, 1,2-diethoxyethane, dimethyl carbonate, diethyl carbonate, ethyl methyl carbonate, fluoroethylene carbonate, γ-butyrolactone, methyl propionate, ethyl propionate, ethylene glycol, and mixed solvents of these can be used. Ethylene carbonate, propylene carbonate, dimethyl carbonate, diethyl carbonate, and ethyl methyl carbonate are preferably used; however, the organic solvent is not limited to these.

### Power storage device

The power storage device of the present embodiment has a wound electrode body which is fixed by the tape for preventing loosening of the present embodiment. The entire structure of the power storage device of the present embodiment can have a substantially identical structure with that of a known wound power storage device. That is, the power storage device of the present embodiment typically has a structure in which a wound electrode body is sealed together with an electrolyte solution in a case. The case is, for example, formed from a metal and is in a shape of a tube with a bottom or in a rectangular shape. Lead wires from the wound positive electrode material and negative electrode material are each connected by, for example, a stitch or an ultrasonic weld. The lead wires are each an electrode leading means that is electrically connected to an outside for each of the positive electrode and the negative electrode, and the lead wires are led from an end face of the wound electrode body.

Note that a shape of the power storage device is not particularly limited and, for example, can be circular or rectangular.

As is clear from the description above, the base film of a tape for preventing loosening according to an embodiment of the present invention is a base film used for a tape for preventing loosening of a wound electrode body, the base film containing a vinylidene fluoride resin as a main component, and the vinylidene fluoride resin containing 1 ppm or greater and less than 12000 ppm of an ionic surfactant relative to a weight of the vinylidene fluoride resin.

Furthermore, in an aspect of the base film, the ionic surfactant is a fluorine-based anionic surfactant.

Furthermore, in an aspect of the base film, the fluorine-based anionic surfactant is sulfonate salt or carboxylate salt having from 4 to 14 carbons.

Furthermore, in an aspect of the base film, a volume resistivity is 1 x 10⁹ Ω·cm or greater and less than 1 × 10¹³ Ω·cm.

The tape for preventing loosening of a wound electrode body according to an embodiment of the present invention has the base film described above and an adhesive layer arranged on one side or both sides of the base film.

The power storage device according to an embodiment of the present invention has a wound electrode body to which the tape for preventing loosening of a wound electrode body described above is attached.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

### [Examples]

### Measurement of average thickness of film

The thickness of the base film was measured by a dial thickness gauge (available from Mitutoyo Corporation, trade name: VL-50-B). For the base film which was the measurement target, thicknesses were measured at freely-chosen 10 points, and the average value (arithmetic mean) was determined and used as the average thickness of the film.

### Volume resistivity measurement for film

The volume resistivity was measured by using Hiresta-UP, available from Dia Instruments Co., Ltd., and UR probe.

### Example 1

After 100 parts by weight of the polyvinylidene fluoride (PVDF) powder A (available from Kureha Corporation, KF polymer W #1000) and 0.001 parts by weight of potassium perfluorobutanesulfonate (available from DIC Corporation, MEGAFACE F114) as an ionic surfactant were mixed, the mixture was then supplied to a twin-screw extruder having a screw nominal diameter of 26 mm. The mixture was melt-kneaded at a cylinder temperature of 190°C. Thereafter, the mixture was melt-extruded in strand form from a die at an extrusion rate of 10 kg/hr and cut in cold water to obtain pellets for film formation. The polyvinylidene fluoride powder A is a polyvinylidene fluoride synthesized by suspension polymerization without using any ionic surfactant, and the melt flow rate thereof is 6.0 g/10 min (ASTM D1238: measurement temperature: 230°C; load: 5 kg).

The obtained pellets for film formation were extruded by using a single-screw extruder equipped with a T-die having a diameter of 90 mm at a die temperature of 240°C, and a film was produced in a manner that the width was 1100 mm and the average thickness was 40 ± 2 µm and was used as the base film. The average thickness and the volume resistivity of the obtained base film are shown in Table 1.

### Example 2

A base film was obtained by the same manner as in Example 1 except for changing the added amount of the potassium perfluorobutanesulfonate to 0.01 parts by weight. The average thickness and the volume resistivity of the obtained base film are shown in Table 1.

### Example 3

A base film was obtained by the same manner as in Example 1 except for changing the added amount of the potassium perfluorobutanesulfonate to 0.05 parts by weight. The average thickness and the volume resistivity of the obtained base film are shown in Table 1.

### Example 4

A base film was obtained by the same manner as in Example 1 except for using a 1% concentration aqueous solution obtained by dissolving 0.01 parts by weight of potassium perfluorobutanesulfonate as an ionic surfactant to be mixed with the polyvinylidene fluoride powder A and using this after mixing and drying at 80°C for 20 hours. The average thickness and the volume resistivity of the obtained base film are shown in Table 1.

### Example 5

In an autoclave having an internal capacity of 2 L, 1000 g of ion-exchanged water, 4 g of ammonium perfluorooctanoate, 3.2 g of ethyl acetate, and 0.8 g of sodium pyrophosphate were charged, pressure was applied to 5 MPa, and nitrogen substitution was performed three times. Thereafter, 80 g of vinylidene fluoride (VDF) monomer was charged, and the temperature was increased to 80°C. After the temperature reached 80°C, 24 g of 1 wt% aqueous solution of ammonium persulfate was added, and polymerization was initiated. After the pressure in the container was reduced to 3.2 MPa, the VDF monomer was intermittently added to maintain the pressure. The polymerization was completed at the point when the total of 400 g, including the initially added amount, of the monomers was added, and the unreacted monomers in the container was purged to end the emulsion polymerization. At this time, the polymer yield relative to the amount of the added monomer was 93%. The obtained emulsion was dried by spray drying. The polyvinylidene fluoride powder B containing the ammonium perfluorooctanoate was obtained. The melt flow rate of the polyvinylidene fluoride powder B was 0.3 g/10 min (ASTM D1238; measurement temperature: 230°C; load: 5 kg). This polyvinylidene fluoride powder was pressed at 240°C for 10 minutes to produce a 20 cm square film having a thickness of 124 µm (film 1B) and this was used as the base film. The average thickness and the volume resistivity of the obtained base film are shown in Table 1.

### Comparative Example 1

A base film was obtained by the same manner as in Example 1 except for adding no surfactant. The volume resistivity of the obtained base film is shown in Table 1.

**Table 1**

| | Resin | Surfactant | Surfactant added amount (ppm) | Film average thickness (µm) | Volume resistivity (Ω·cm) |
|---|---|---|---|---|---|
| Example 1 | PVDF powder A | Potassium perfluorobutanesulfonate | 10 | 41 | 7.0×10¹² |
| Example 2 | | | 100 | 38 | 7.0 × 10¹¹ |
| Example 3 | | | 500 | 42 | 6.7 x 10¹¹ |
| Example 4 | | | 100 | 41 | 8.35 x 10¹¹ |
| Example 5 | PVDF powder B | Ammonium perfluorooctanoate | 10000 | 124 | 1.1 × 10¹² |
| Comparative Example 1 | PVDF powder A | - | - | 41 | 6.6 × 10¹³ |

### [Industrial Applicability]

The present invention can be utilized for devices, such as lithium-ion secondary batteries.

## Claims

1. A base film used for a tape that prevents loosening of a wound electrode body,
the base film comprising a vinylidene fluoride resin as a main component,
the vinylidene fluoride resin containing 1 ppm or greater and less than 12000 ppm of an ionic surfactant relative to a weight of the vinylidene fluoride resin.

2. The base film according to claim 1, wherein the ionic surfactant is a fluorine-based anionic surfactant.

3. The base film according to claim 2, wherein the fluorine-based anionic surfactant is sulfonate or carboxylate having from 4 to 14 carbons.

4. The base film according to any one of claims 1 to 3, wherein a volume resistivity is 1 x 10⁹ Ω·cm or greater and less than 1 × 10¹³ Ω·cm.

5. A tape for preventing loosening of a wound electrode body, the tape comprising the base film according to any one of claims 1 to 4, and an adhesive layer disposed on one side or both sides of the base film.

6. A power storage device comprising a wound electrode body to which the tape for preventing loosening according to claim 5 is attached.
